(19) Europäisches Patentamt
European Patent Office
Office européen des brevets

(11) EP 2 244 516 B1

(12) **EUROPEAN PATENT SPECIFICATION**

(45) Date of publication and mention
of the grant of the patent:
**18.05.2016 Bulletin 2016/20**

(51) Int Cl.:
*H04W 72/12* (2009.01)          *H04W 28/14* (2009.01)
*H04B 7/155* (2006.01)          *H04B 7/26* (2006.01)
*H04W 84/04* (2009.01)          *H04L 12/863* (2013.01)

(21) Application number: **09360021.1**

(22) Date of filing: **23.04.2009**

(54) **Relaying data between a base station and user equipment**

Weiterleiten von Daten zwischen einer Basisstation und einem Teilnehmergerät

Relais de données entre une station de base et un équipement utilisateur

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**27.10.2010 Bulletin 2010/43**

(73) Proprietor: **ALCATEL LUCENT
92100 Boulogne-Billancourt (FR)**

(72) Inventors:
• **Alexiou, Angeliki
Swindon,
Wiltshire SN5 5FH (GB)**

• **Boccardi, Frederico
Swindon,
Wiltshire SN1 2EE (GB)**

(74) Representative: **Berthier, Karine
Alcatel-Lucent International
148/152, route de la Reine
92100 Boulogne-Billancourt (FR)**

(56) References cited:
**US-A1- 2008 165 719    US-A1- 2009 003 267**

**Description**

FIELD OF THE INVENTION

The present invention relates to a relay operable to relay data between a base station and user equipment of a wireless communications system, a relay-base station pair, methods and computer program products.

BACKGROUND

The use of relays within a wireless communications system is known. A relay may be provided within a macro cell in order to provide enhanced coverage within that macro cell. For example, a relay may be provided within a macro cell in an area of high attenuation such as, for example, in the vicinity of a building. The relay communicates with a macro base station and with any user equipment in the area of high attenuation. The macro base station, when communicating with user equipment will determine whether to route data to the user equipment either directly or via the relay. Whilst this arrangement provides for improved coverage, the use of such relays can result in undesirable consequences.

US 2008/0165719 discloses techniques for relay zone bandwidth allocation by a base station. In particular, a method performed by a base station for allocating channel resources of relay stations in a multi-hop wireless communications systems is disclosed. Both uplink and downlink bandwidth allocations are performed at the base station and signalled to the mobile station via downlink and uplink maps located in the beginning of every frame. To enable relay operation, the uplink and downlink portions of the frame are further divided into base station managed zones and relay managed zones. The relay is capable of certain autonomous scheduling functions and manages its zone, as required, to satisfy the traffic demands of the mobile stations it supports.

US 2009/0003267 discloses a technique in which the assignment of connection identifiers between those which will be locally-scheduled at relay stations and those centrally-scheduled by a base station is discussed.

Accordingly, it is desired to provide an improved technique for relaying data between a base station and user equipment of the wireless communication system.

SUMMARY OF THE INVENTION

According to a first aspect, there is provided a relay operable to relay data between a base station and user equipment of a wireless communications system, the relay comprising: queuing logic operable, for each user equipment supported by the relay, to form a pending data queue associated with that user equipment, the pending data queue storing received data intended for that user equipment which has yet to be transmitted by the relay over a communications channel between that user equipment and the relay; and scheduling logic operable to schedule transmissions of pending data to each user equipment based on at least one of a size of the pending data queue associated with each user equipment, priority of pending data and channel state information of the communications channel between each user equipment and the relay.

The first aspect recognises that a problem with existing relay implementations is that the base station implements a centralised approach in which it controls the transmission of data from relays to user equipment. This centralised approach requires control information to be transmitted between the base station and the relays. Furthermore, to enable the base station to make an accurate assessment of the most efficient way to transmit data to user equipment, the base station needs to be aware of the state of any user data queues within the relays, as well as having knowledge of the quality of the communication links between the relay and user equipment. This information needs to be transmitted between the relay and the base station and requires the base station to rapidly process that information in order to make a decision on the best way to service the user equipment. The amount of signalling required over control channels between the base station and relays increases enormously as the number of relays increase, particularly when simple scalar feedback of link quality is not possible such as may be the case with multiple antenna relay configurations. Also, the amount of processing required at the base station in order to make an accurate and timely assessment of the most appropriate data transmissions to perform is high. Hence, careful network planning needs to occur in order to ensure that the base station can operate efficiently and the available resources are not exceeded.

Accordingly, a relay is provided having queuing logic which forms pending data queues, each pending data queue being associated with different user equipment. Each pending data queue stores data which has been received from the base station but has yet to be delivered to the user equipment. Scheduling logic is also provided which schedules the transmissions of the pending data in the pending data queues to each user equipment. The scheduling of the data transmissions are based on one or more of the pending data queue size, the channel state of the communications channel between a user equipment and the relay and the priority of the pending data. In this way, it can be seen that by moving some of the scheduling decisions towards to relay side, the relay itself can make these decisions and obviate the need to provide control information to those relays from a controlling base station. Also the amount of feedback information which needs to be provided from the relay to the base station is reduced. It will be appreciated that the amount of feedback which is required, particularly where multiple antenna relays are deployed, grows enormously. Hence, the amount of unnecessary traffic being transmitted between the base station and the relays is reduced, the amount processing resources required in the base station is also reduced and, as a consequence, the deployment of relays within the macro network becomes much more scalable. Accordingly, new relays can be readily deployed where needed without requiring complex and careful network planning.

In one embodiment, the scheduling logic is operable to identify that pending data to be transmitted next by scheduling transmissions of higher priority pending data over lower priority pending data. Accordingly, the relay is operable to ensure that where high priority pending data is queued within the pending data queue, that higher priority pending data is transmitted in advance of lower priority pending data. It will be appreciated that examples of such high priority data include real time transmissions or other time-sensitive data.

In one embodiment, the scheduling logic is operable to identify that pending data to be transmitted next from the size of the pending data queue associated with each user equipment and channel state information of the communications channel between each user equipment and the relay. Accordingly, the scheduling logic makes the determination of which data to transmit next based on its knowledge of the size of the pending queue of data stored by the queuing logic for each user equipment considered in combination with the channel state information of the channels between the user equipment and the relay. In this way, it can be seen that a trade-off can be obtained to ensure that the most appropriate data transmission occurs.

In one embodiment, the scheduling logic is operable to identify that pending data to be transmitted next in accordance with the following algorithm:

$$D_{l_i}(t) = R_{l_i}(t)Q^j_{rs,i}(t), dest(l_i) \in M$$

where $R_{l_i}(t)$ is an estimate of the rate for the communications channel $l_i$, the set of all user equipment is denoted as $M$ = {1,...,$K$},and $Q^j_{rs,i}(t)$, $\forall i, j \in M$ denotes the size of the queues for user equipment j in the base station and at the $i^{th}$ relay at the start of time frame t, and the optimal active link for the next time frame is selected as:

$$l_i^*(t) = \underset{dest(l_i) \in M}{\arg \max} \, D_{l_i}(t).$$

Accordingly, the scheduling logic assesses the available transmission rate for each communications channel and the size of the queue for each user equipment. The pending data which has in combination the largest queue size and best transmission rate will be transmitted next.

In one embodiment, the relay comprises: measurement logic operable to receive information identifying transmissions from other relays; and cooperation logic operable, in response to an indication from the measurement logic that another relay is causing interference, to cause cooperative transmissions between relays. Accordingly, measurement logic is provided which receives information regarding transmissions from other relays. It will be appreciated that such sensing may be performed directly by the relay itself, or from measurement reports made by user equipment. Should an indication be received that another relay is causing inference with transmissions from the relay, the operation logic causes the relays to cooperate in their transmissions. Again, by moving the decision making on scheduling towards the relay side, local, autonomous cooperation between relays becomes possible. Accordingly, interference which would otherwise limit the gains achieved by deploying relays can be reduced though cooperation between relays. Such an approach is possible because by enabling the interfering relays to make near-instantaneous estimates of the amount of interference, cooperation to reduce that inference is possible.

In one embodiment, the cooperation logic is operable to indicate to another relay acceptable transmission characteristics for that relay. Accordingly, when interference is identified, the relay may transmit to another relay information relating to transmissions which could be made to reduce interference. For example, the relay may transmit to that another relay a set of carriers currently allocated to user equipment and that another relay may then be prevented from allocating those carriers. Alternatively, the user equipment could forward to that another relay the set of carriers currently allocated for its transmissions with the relay. Alternatively, when such interference is sensed, a relay may itself decide to avoid such interference by selecting different channels for its own use, thereby avoiding the need to transmit any information to the other relay.

According to a second aspect, there is provided a method of relaying data between a base station and user equipment of a wireless communications system, the method comprising the steps of: forming, at a relay, a pending data queue associated with each user equipment, the pending data queue storing received data intended for that user equipment which has yet to be transmitted over a communications channel to that user equipment; and scheduling transmissions of pending data from the relay to each user equipment based on at least one of a size of the pending data queue associated with each user equipment, priority of pending data and channel state information of the communications channel.

According to a third aspect, there is provided a relay-base station pair, comprising: a base station comprising: base station queuing logic operable, for each user equipment supported by the base station, to form a pending data queue associated with that user equipment, the pending data queue storing received data intended for that user equipment which has yet to be transmitted by the base station over a communications channel between that user equipment and the base station; and base station scheduling logic operable to schedule transmissions of pending data to each user equipment based on at least one of a size of the pending data queue associated with each user equipment, priority of pending data and channel state information of the communications channel between each user equipment and the base station; and the relay of the first aspect.

Accordingly, both the base station and relay may together provide a two-stage distributed scheduling technique where both the base station and the relay make what is assessed by those apparatus to be the most effective scheduling decisions for their pending data transmissions. The base station utilises a similar decision making process to the relay by assessing the priority of the pending data, and by assessing the relative size of the pending data queues at both the base station and the relay, in combination with the quality of the communications channel between the two. This separate but complimentary and synergistic decision process helps to ensure that the pending data is transmitted between the base station and the user equipment in the most efficient way.

In one embodiment, the base station scheduling logic is operable to schedule transmissions of pending data based on at least one of the size of the pending data queue associated with each user equipment, priority of pending data and channel state information of the communications channel directly between each user equipment and the base station and between the base station and any relay supporting each user equipment. Accordingly, the base station scheduling logic will assess the quality of both the communications channel provided directly between that base station and a user equipment, together with the quality of the communications link between the base station and any relay which supports that user equipment. In this way, the base station will select the best possible communications channel for the data to be transmitted.

In one embodiment, the base station scheduling logic is operable to identify that pending data to be transmitted next by scheduling transmissions of higher priority pending data over lower priority pending data. Accordingly, that data having a higher priority will be transmitted in preference to lower priority data to ensure that it is received in the most timely manner possible.

In one embodiment, the base station scheduling logic is operable, when the pending data to be transmitted next is to be transmitted using the communications channel between the base station and a relay, to decide which pending data to transmit based on a difference in associated pending data queue sizes at the relay and the base station. Accordingly, the scheduling logic will determine the relative difference in the size of the data queues at the base station and the relay. If the data queue at the base station for one user is very high, but the data queue at the relay for that user is low, then that data may take preference over data for another user where the pending data queue at the base station is low, but the pending data queue at the relay is high.

In one embodiment, the base station scheduling logic is operable to identify that pending data to be transmitted next in accordance with the following algorithm:

$$D_l(t) = \begin{cases} R_l(t) Q_{BS}^j(t), & \text{if } j = dest(l) \in M \\ R_l(t) \max_{j \in M} \left\{ \max \left\{ Q_{BS}^j(t) - Q_{rs,i}^j(t), 0 \right\} \right\}, & \text{if } dest(l) = RS_i \end{cases}$$

where $Q_{BS}^j(t)$ denotes the size of the queue at the base station for the j$^{th}$ user equipment at time t.

In one embodiment, the relay is operable to provide an indication of the size of each pending data queue to the base station.

In one embodiment, the relay is operable to provide an indication of a change in size of each pending data queue to the base station. Accordingly, rather than having to report on the size of each queue all the time, it may be more efficient to only transmit information indicating when the size of a queue changes.

According to a fourth aspect, there is provided a method of relaying data between a relay-base station pair and user equipment of a wireless communications system, the method comprising the steps of: forming at a base station, for each user equipment supported by the base station, a pending data queue associated with that user equipment, the pending data queue storing received data intended for that user equipment which has yet to be transmitted by the base station over a communications channel between that user equipment and the base station; scheduling transmissions of pending data to each user equipment based on at least one of a size of the pending data queue associated with each user equipment, priority of pending data and channel state information of the communications channel between each user equipment and the base station; and the method steps of the third aspect.

According to a fifth aspect, there is provided a computer program product operable, when executed on a computer, to perform the method steps of the second aspect.

According to a sixth aspect, there is provided a computer program product operable, when executed on a computer, to perform the method steps of the fourth aspect.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates a general relay deployment within one macro cell;
Figure 2 illustrates the main components of the relays shown in Figure 1 according to one embodiment;
Figure 3 illustrates the main components of the base station shown in Figure 1 according to one embodiment; and
Figure 4 is a flow chart illustrating the main processing steps of the relays and base station shown in Figure 1.

DESCRIPTION OF THE EMBODIMENTS

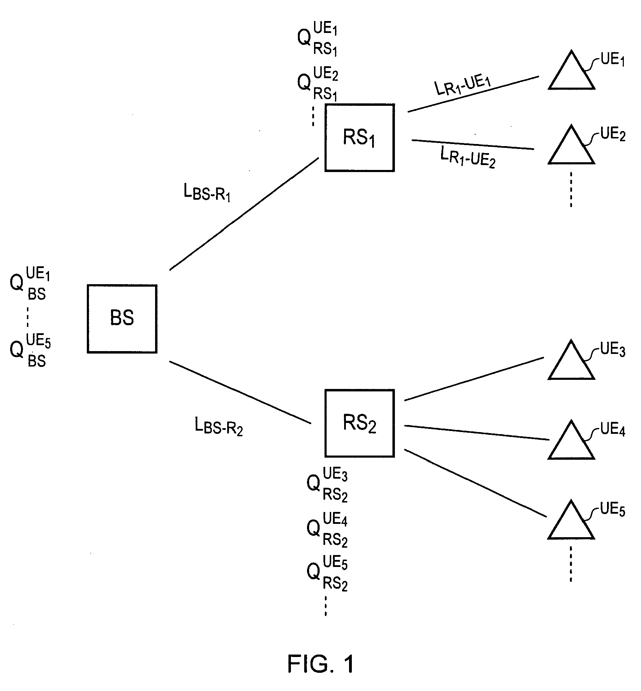

Figure 1 illustrates an example deployment of relays within a macro cell supported by a base station. User equipment UE roam through the wireless communication system. Base stations BS are provided which support respective macro cells. Typically, a number of such base stations BS are provided, which are distributed geographically in order to provide a wide area of coverage to the user equipment UE. When user equipment UE is within a macro cell supported by the base station BS then communications may be established between the user equipment UE and the base station UE over an associated radio link. Each base station BS typically supports a number of sectors. Typically, a different antenna or antenna array within a base station BS supports an associated sector. Accordingly, each base station BS has multiple antennas and signals sent through the different antennas are electronically weighted to provide a sectorised approach. Of course, it will be appreciated that Figure 1 illustrates a small subset of the total number of user equipment and base stations that may be present in a typical communications system.

Within a macro cell is proved a number of relays $RS_1$, $RS_2$. The relays $RS_1$, $RS_2$ provide local wireless coverage to support user equipment in their vicinity. In this example, $RS_1$ supports user equipment $UE_1$ and $UE_2$. Likewise, the relay $RS_2$ support user equipment $UE_3$, $UE_4$ and $UE_5$. Of course, relays may support more user equipment than this and user equipment may be supported by more than one relay. Wireless communications links, I, are provided between each relay and the support user equipment. As mentioned previously, the state of these wireless communications links will vary with time, dependent on local conditions such as the relative locations of the relay to the user equipment and any interfering transmissions or other noise. Accordingly, at any particular time, the data rate supported on each of these links will vary, with some links being able to support a higher data rate than others. Each relay $RS_1$, $RS_2$ maintains a data queue, Q, which stores pending data packets which have been received from the base station BS but have yet to be transmitted to the intended user equipment. In normal operation, the size of these pending data queues will grow and shrink depending on the rate at which data packets are received from the base station BS over a communications link between that relay and the base station BS and the rate at which these data packets can be relayed onto the intended user equipment over their associated communications links.

The base station BS stores data packets in a pending data queue, Q, for each user equipment supported by that base station. The size of this queue will also vary depending on the rate at which data packets are received by the base station BS from the core network (not shown) and upon the rate at which these packets may be delivered to the intended user equipment either directly over a communications link, I, between the base station BS and that user equipment, or the rate at which the data packets may be provided to a relay supporting that user equipment.

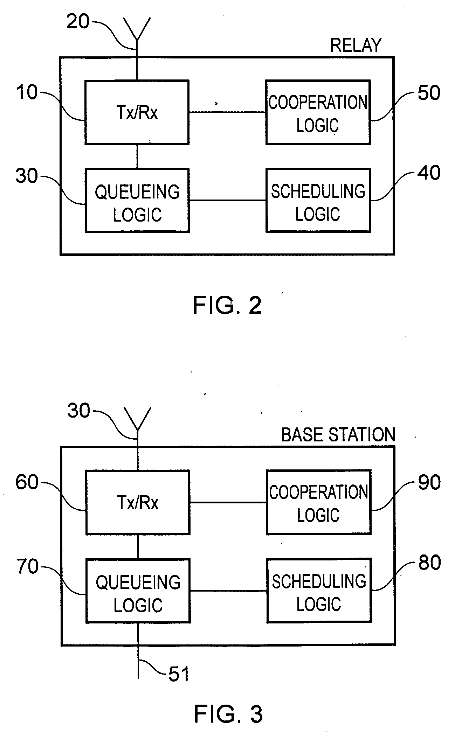

Figure 2 illustrates in more detail components of a relay R according to one embodiment. It will be appreciated that other components of the relay have been omitted to improve clarity. The relay comprises transceiver logic 10 coupled with a multiple antenna array 20 and operable to communicate both with the base station BS and user equipment over respective links. In this embodiment, the relay is half-duplex, however, it will be appreciated that the relay could be full-duplex. Coupled with the transceiver 10 is queuing logic 30 which is operable to create a first-in first-out (FIFO) queue which stores user data received for each user equipment being supported by that relay. Scheduling logic 40 is provided which interrogates the queuing logic 30 to establish the size of each queue and which receives channel state information indicating an estimate of an instantaneous signal to interference plus noise ratio (SINR) for each wireless communications link between the relay and each user equipment. As will be explained in more detail below, the scheduling logic 40 helps to ensure user-fairness by making scheduling decisions based on the state of each user's queue and on the estimate of instantaneous SINRs which does not assume an orthogonal separation of resources between base station-to-relay links and base station or relay-to-user equipment links. Cooperation logic 50 is also provided which enables cooperation to occur between relays as an effective way to combat interference between transmissions made by those relays, as also will be described in more detail below.

The cooperation logic 50 receives information regarding interfering transmissions via the transceiver logic 10. The cooperation logic 50 will then either cause the relay to adjust its transmissions or will take steps to adjust the transmissions of the interfering relay by transmitting messages to that relay via the transceiver 10.

Figure 3 illustrates the main components of a base station BS according to one embodiment. Once again, only the main components required to support this embodiment have been illustrated and other components have been omitted to improve clarity. A transceiver 60 is provided which is coupled with an antenna array 30 and which supports wireless transmissions over wireless communications links between the relays and the user equipment. Coupled with the transceiver 60 is queuing logic 70 which maintains, for each user equipment supported by that base station, a FIFO queue, Q, containing data which has been received from the core network over an S 1 link, but has yet to be transmitted to that user equipment either directly or via a relay. Once again, the size of each of these queues will vary dependent on which the rate at which the data is received from the core network at the rate at which this data can be transmitted to the user equipment either directly or via the relays. Scheduling logic 80 is provided which makes scheduling decisions based on the state of the user equipment queues and on an estimate of instantaneous SINRs of the direct wireless link between the base station and the user equipment, and the wireless link between the base station and relays. Cooperation logic 90 is also provided which enables cooperation to occur between relays as an effective way to combat interference between transmissions made by those relays, as also will be described in more detail below.

The cooperation logic 90 receives information regarding interfering transmissions via the transceiver logic 90. The cooperation logic 90 will then either cause relays to adjust their transmissions by transmitting messages to that relay via the transceiver 60.

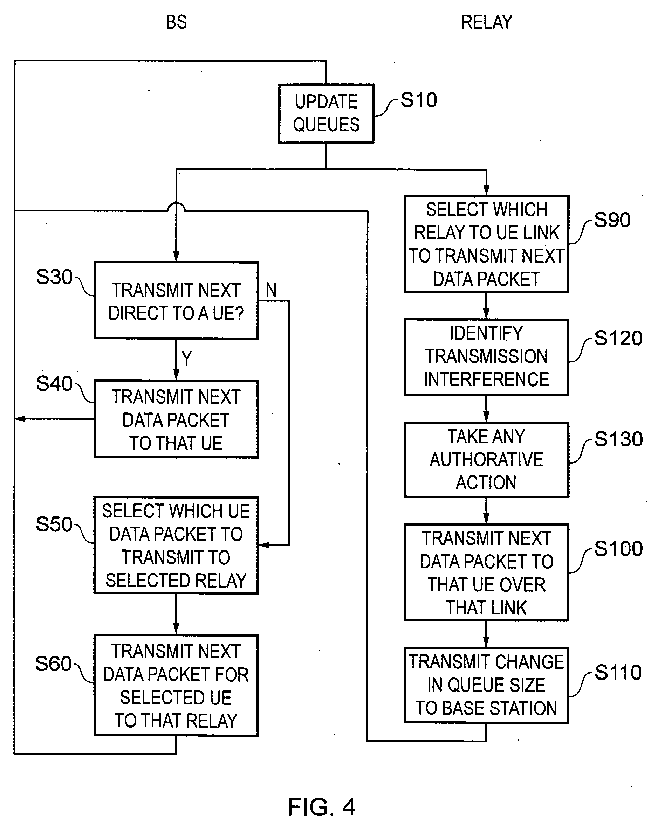

The operation of the base station and each relay is illustrated in more detail in Figure 4. In overview, a distributed, two-phase scheduling scheme is provided which obviates the need to provide channel state information between the relays and base station, and obviates then need to transmit relay control information from the base station to the relays.

In the first phase, the base station BS makes its scheduling decision for the next time slot by taking into account the channel conditions of the wireless links directly between the base station and user equipment, and the channel conditions of the wireless links between the base station and the relays, as well as the size of the user equipment queues in both the base station and the relays. The selected destination for the transmission in the next time slot could be either a relay or user equipment.

In the second phase, because each relay is half-duplex, any relay which has not been selected to receive transmissions from the base station BS in the first phase makes it scheduling decision for transmissions to user equipment on that time slot by taking into account channel conditions of the wireless links between that relay and the user equipment, and on the state of the user equipment queues in that relay.

Turning now to the operation in detail, at step S10, the base station BS checks to see whether a new data packet has been received from the core network. If a new data packet has been received, then that data packet is added to the appropriate user equipment queue. If no new data packet has been received processing proceeds to step S30. Of course, it will be appreciated that the base station BS supports full-duplex and so it is able to receive new data packets and transmit queued data packets in the same time slot.

At step S30 an assessment is made of whether to transmit in the next time slot to a user equipment using a wireless link directly between the base station BS and that user equipment. This assessment is made in the following way. The set of all transmitters within the macro base stations is denoted as $T=\{1,...,N+1\}$, corresponding to the N relays and the single base station BS. Similarly, the set of all users is denoted as $M = \{1,...,K\}$. The total number of wireless links that the base station considers is given by the $L = N + K$, which includes all the wireless links between the base station and the users and between the base station and the relays. For a generic link I, for simplicity the transmission rate can be estimated using the Shannon Formula as $R_i(t) = \log_2\left(1 + SINR_{orig(l)}^{dest(l)}(t)\right)$ [bits/sec/Hz]. Where $SINR_{orig(l)}^{dest(l)}(t)$ is the SINR at the destination of the $I^{th}$ link at the time frame t, assuming that all other simultaneously active links are interfering. Accordingly, different from the centralised scheduling approach a transmitter set is activated without taking into account the interference generated to the scheduled receivers in order to maximise spatial reuse. On the other hand, the relays are operable to tackle interference by using cooperative scheduling as will be described in more detail below. Let $Q_{BS}^j(t)$, $j \in M$ and $Q_{rs,i}^j(t)$ denote the size of the queues at the base station for user equipment j in the macro cell and at the $I^{th}$ relay for user equipment j, respectively, at the start of the next time frame. To enable the base station to make that assessment, the relays will transmit information enabling the base station to determine the size of the queues at the relays as will be described in more detail below. Let us define $D_l(t)$ as

$$D_l(t) = \begin{cases} R_l(t)Q_{BS}^j(t), \text{ if } j = dest(l) \in M \\ R_l(t)\max_{j \in M}\left\{\max\left\{Q_{BS}^j(t) - Q_{rs,i}^j(t), 0\right\}\right\}, \text{ if } dest(l) = RS_i \end{cases}$$

where the first case corresponds to the transmission directly to a user equipment and the second case corresponds to the transmission to the Ith relay. The optimal active link for the next time frame t is selected as follows:

$$l^*(t) = \arg\max_{l=\{1,\dots,L\}} D_l(t)$$

If transmission directly to a user is selected, then the scheduling logic 80 causes the next data packet within the associated user queue stored by the queuing logic 70 to be transmitted via the transceiver 60 to that user equipment and processing returns to step S10. If the optimal link is selected to be a link between the base station BS and the Ith relay for the next time frame, then processing proceeds to step S50.

At step S50, the user equipment whose packets will be transmitted over this link is selected in accordance with the following algorithm:

$$j_{l^*}^*(t) = \arg\max_{j \in M}\left\{\max\left\{Q_{BS}^j(t) - Q_{rs,i}^j(t), 0\right\}\right\}$$

At step S60, the scheduling logic 80 causes the queuing logic 70 to transmit the next data packet stored within that user equipments queue via the transceiver logic 60 to the selected relay.

Meanwhile, at each relay, an assessment is made by that relay of whether control information from the base station indicates that that relay has been selected to receive a data packet in the next time frame. Because each relay is half-duplex this will mean that it is therefore unable to also transmit data packets to user equipment in that time slot. However, if the relay was full-duplex, then concurrent reception and transmission of data packets would be possible.

If the relay has been select to receive data packet, the received data packet is added to the appropriate user equipment queue. If no data packet is to be received from a base station, then processing proceeds to S90.

At step S90, the second phase of the scheduling begins at the relay. The scheduling logic 40 selects which relay to user equipment wireless link should be used to transmit data packets. Considering the Ith relay, lets us define $D_{l_i}(t)$ as

$$D_{l_i}(t) = R_{l_i}(t)Q_{rs,i}^j(t), dest(l_i) \in M$$

where $R_{l_i}(t)$ is an estimate of the rate for the link I, taking into account the scheduling decision of the base station BS. The optimal link for the next time frame t is selected as follows:

$$l_i^*(t) = \arg\max_{dest(l_i) \in M} D_{l_i}(t)$$

At step S120, interference between the relay transmission and the transmission of other relays is identified so that local cooperation can occur. Such local cooperation can be an effective way to combat interference between two relays. For example, user equipment $UE_2$ may be served by relay $RS_1$ but sees relay $RS_2$ as a strong interferer. Accordingly, low-rate cooperation occurs between relays $Rs_1$ and $RS_2$. The identification of transmission interference occurs as follows. The user equipment receives pilots from different transmitters such as relays or base stations. It selects the best transmitter as a function of the received power and identifies the dominant interfering transmitter(s) by looking at its pilot power. Considering the example where relay $RS_1$ is the best transmitter and relay $RS_2$ is the dominant interferer, we define gamma $\gamma$ as the ratio between power received from relay $RS_1$ and the power received from relay

$RS_2$, $\gamma = \dfrac{P_1}{P_2}$. If $\gamma \leq \bar{\gamma}$ for a given threshold, then the user equipment requires cooperation between the relay $RS_1$ and

relay RS$_2$.

Accordingly, at step 130, any ameliorative action is taken. For example, assuming OFDMA modulation, relay RS$_1$ transmits to relay RS$_2$ either directly or via the user equipment, the set of the carriers allocated to that user equipment, and the relay RS$_2$ avoids allocating those carriers. The same approach could be used to allocated orthogonal beams, assuming multiple antennas at the relay side.

At step S100, the scheduling logic 40 causes the queuing logic 30 to transmit the next data packet from the appropriate user equipment queue via the transceiver 10 to the user equipment over its wireless link.

At step S110, the change in size of that user equipment's queue is transmitted to the base station BS via the control channel. Of course, it will be appreciated that any increase in the user equipment queues caused by data packets being received from the base station can be inferred by the base station BS without need to transmit this change in size. However, the increase in size of the user equipment queue could also be transmitted, if required.

This procedure is repeated for each relay. It can be seen that for this distributed scheduling approach each relay needs to feedback to the base station only an update of the queue sizes. Unlike in the centralised approach, any feedback concerning the channel state information between the relay and its supported user equipment is not required. Feedback concerning the channel state information can require a considerable amount of bits, particularly when multiple antennas are deployed and a scalar feedback is not sufficient to estimate the SINR of a given link. However, there will be embodiments where such a feedback (or partial feedback) will be transmitted from relays to the base station.

Accordingly, it can be seen that a distributed relay scheme for down link transmissions is provided where a given user equipment can be either served by a base station or a relay in an opportunistic way. Such a distributed approach allows reduced feedback with respect to the centralised approach, particularly when a simple scalar feedback is not sufficient for estimating the channel quality. As a result of the reduced feedback requirement, the system becomes more scaleable and new relays can be deployed where needed without the need for careful network planning. By using a distributed approach, local, low rate relay-to-relay and relay-to-base station cooperation can be implemented even between relays belonging to different cells.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A relay (RS$_1$; RS$_2$) operable to relay data between a base station (BS) and user equipment (UE) of a wireless communications system, said relay comprising:

   queuing logic (30) operable, for each user equipment supported by said relay, to form a pending data queue associated with that user equipment, said pending data queue storing received data intended for that user equipment which has yet to be transmitted by said relay over a communications channel (L) between that user equipment and said relay; and
   scheduling logic (40) operable to schedule transmissions of pending data to each user equipment based on at least one of a size of said pending data queue associated with each user equipment, priority of pending data and channel state information of said communications channel between each user equipment and said relay.

2. The relay as claimed in claim 1, wherein said scheduling logic is operable to identify that pending data to be transmitted next by scheduling transmissions of higher priority pending data over lower priority pending data.

3. The relay as claimed in claim 1 or 2, wherein said scheduling logic is operable to identify that pending data to be transmitted next from said size of said pending data queue associated with each user equipment and channel state information of said communications channel between each user equipment and said relay.

4. The relay as claimed in any preceding claim, wherein said scheduling logic is operable to identify that pending data to be transmitted next in accordance with the following algorithm:

$$D_{l_i}(t) = R_{l_i}(t)Q_{rs,i}^j(t), dest(l_i) \in M$$

   where $R_{l_i}(t)$ is an estimate of the rate for the communications channel $l_i$, the set of all user equipment is denoted as $M = \{1, K, K\}$, and $Q_{rs,i}^j(t)$, $\forall i, j \in M$ denotes the size of the queues for user equipment j in the base station and at the i$^{th}$ relay at the start of time frame t, and the optimal active link for the next time frame is selected as:

$$l_i^*(t) = \underset{dest(l_i) \in M}{\arg\max} D_{l_i}(t).$$

5. The relay as claimed in any preceding claim, comprising:

   measurement logic (10) operable to receive information identifying transmissions from other relays; and
   cooperation logic (50) operable, in response to an indication from said measurement logic that another relay is causing interference, to cause cooperative transmissions between relays.

6. The relay as claimed in claim 5, wherein said cooperation logic is operable to indicate to said another relay acceptable transmission characteristics for that relay.

7. A method of relaying data between a base station (BS) and user equipment (UE) of a wireless communications system, said method comprising the steps of:

   forming, at a relay (RS$_1$; RS$_2$), a pending data queue associated with each user equipment, said pending data queue storing received data intended for that user equipment which has yet to be transmitted over a communications channel to that user equipment; and
   scheduling (S90) transmissions of pending data from said relay to each user equipment based on at least one of a size of said pending data queue associated with each user equipment, priority of pending data and channel state information of said communications channel.

8. A relay-base station pair (RS$_1$, BS; RS$_2$, BS), comprising:

   a base station (BS) comprising:

base station queuing logic (70) operable, for each user equipment supported by said base station, to form a pending data queue associated with that user equipment, said pending data queue storing received data intended for that user equipment which has yet to be transmitted by said base station over a communications channel between that user equipment and said base station; and

base station scheduling logic (80) operable to schedule transmissions of pending data to each user equipment based on at least one of a size of said pending data queue associated with each user equipment, priority of pending data and channel state information of said communications channel between each user equipment and said base station; and

said relay as claimed in any one of claims 1 to 6.

9. The relay-base station pair of claim 8, wherein said base station scheduling logic is operable to schedule transmissions of pending data based on at least one of said size of said pending data queue associated with each user equipment, priority of pending data and channel state information of said communications channel directly between each user equipment and said base station and between said base station and any relay supporting each user equipment.

10. The relay-base station pair of claim 8 or 9, wherein said base station scheduling logic is operable to identify that pending data to be transmitted next by scheduling transmissions of higher priority pending data over lower priority pending data.

11. The relay-base station pair of any one of claims 8 to 10, wherein said base station scheduling logic is operable, when said pending data to be transmitted next is to be transmitted using said communications channel between said base station and a relay, to decide which pending data to transmit based on a difference in associated pending data queue sizes at said relay and said base station.

12. The relay-base station pair of any one of claims 8 to 11, wherein said base station scheduling logic is operable to identify that pending data to be transmitted next in accordance with the following algorithm:

$$D_l(t) = \begin{cases} R_l(t)Q^j_{BS}(t), \text{ if } j = dest(l) \in M \\ R_l(t)\max_{j \in M}\left\{\max\left\{Q^j_{BS}(t) - Q^j_{rs,i}(t), 0\right\}\right\}, \text{ if } dest(l) = RS_i \end{cases}$$

where $Q^j_{BS}(t)$ denotes the size of the queue at the base station for the $j^{th}$ user equipment at time t.

13. The relay-base station pair of any one of claims 8 to 12, wherein said relay is operable to provide an indication of said size of each pending data queue to said base station.

14. The relay-base station pair of any one of claims 8 to 12, wherein said relay is operable to provide an indication of a change in size of each pending data queue to said base station.

15. A method of relaying data between a relay-base station pair ($RS_1$, BS; $RS_2$, BS) and user equipment (UE) of a wireless communications system, said method comprising the steps of:

forming (S10) at a base station (BS), for each user equipment supported by said base station, a pending data queue associated with that user equipment, said pending data queue storing received data intended for that user equipment which has yet to be transmitted by said base station over a communications channel between that user equipment and said base station;

scheduling (S30) transmissions of pending data to each user equipment based on at least one of a size of said pending data queue associated with each user equipment, priority of pending data and channel state information of said communications channel between each user equipment and said base station; and

said method steps of claim 7.

**Patentansprüche**

1. Relais ($RS_1$; $RS_2$), **dadurch gekennzeichnet, dass** es zur Weiterleitung von Daten zwischen einer Basisstation (BS) und einem Endgerät (UE) eines drahtlosen Kommunikationssystems eingesetzt werden kann, wobei das genannte Relais Folgendes umfasst:

Warteschleifen-Logik (30), **dadurch gekennzeichnet, dass** sie für jedes vom genannten Relais unterstützte Endgerät eingesetzt werden kann, sodass eine anstehende Datenwarteschleife gebildet wird, die zu dem Endgerät gehört, wobei die genannte Datenwarteschleife empfangene Daten speichert, die für das Endgerät bestimmt sind und die vom genannten Relais über Kommunikationskanäle (L) zwischen diesem Endgerät und dem genannten Relais noch übertragen werden müssen, und

Planungslogik (40), **dadurch gekennzeichnet, dass** sie zur Planung der Übertragung der anstehenden Daten an jedes Endgerät eingesetzt werden kann, basierend auf zumindest einer Größe der anstehenden Datenwarteschleife, die jedem Endgerät zugeordnet ist, und der Priorität der anstehenden Daten und Kanalzustandsmeldungen des genannten Kommunikationskanals zwischen jedem Endgerät und dem genannten Relais.

2.  Relais nach Anspruch 1, **dadurch gekennzeichnet, dass** die genannte Planungslogik dazu eingesetzt werden kann, die anstehenden Daten zu identifizieren, die beim nächsten Mal übertragen werden, indem Übertragungen anstehender Daten mit höherer Priorität vor denen der anstehenden Daten mit niedrigerer Priorität eingeplant werden.

3.  Relais nach Anspruch 1 oder 2, **dadurch gekennzeichnet, dass** die genannte Planungslogik dazu eingesetzt werden kann, die genannten anstehenden Daten zu identifizieren, die von der genannten, anstehenden Datenwarteschleife mit der genannten Größe beim nächsten Mal übertragen werden, wobei diese Datenschleife jedem Endgerät zusammen mit den Kanalzustandsmeldungen des genannten Kommunikationskanals zwischen jedem Endgerät und dem genannten Relais zugeordnet ist.

4.  Relais nach jedem der oben genannten Ansprüche, **dadurch gekennzeichnet, dass** die genannte Planungslogik dazu eingesetzt werden kann, die anstehenden Daten beim nächsten Mal gemäß den folgenden Algorithmen zu übertragen:

$$D_{l_i}(t) = R_{l_i}(t)Q_{rs,i}^j(t), dest(l_i) \in M$$

wobei $R_{l_i}(t)$ eine Schätzung der Rate für den Kommunikationskanaf $l_i$ ist, der gesamte Satz aller Endgeräte als $M$ = $\{1,K,K\}$ bezeichnet wird und $Q_{rs,i}^j(t),$ $\forall i, j \in M$ die Größe der Warteschleifen für das Endgerät j an der Basisstation und am Relais $i$ zu Beginn des Zeitrahmens t repräsentieren und die optimal aktive Verknüpfung für den nächsten Zeitrahmen folgendermaßen gewählt wird:

$$l_i^*(t) = \arg\max_{dest(l_i)\in M} D_{l_i}(t).$$

5.  Relais nach jedem der oben genannten Ansprüche, **dadurch gekennzeichnet, dass** es aus Folgendem besteht:

Messlogik (10), die dazu eingesetzt werden kann, Meldungen zu empfangen, die die Übertragungen von anderen Relais identifizieren, und

Kooperationslogik (50), die als Antwort auf eine Anzeige der genannten Messlogik eingesetzt werden kann, dass ein anderes Relais Störungen verursacht, damit so gemeinsame Übertragungen zwischen den Relais geschaffen werden.

6.  Relais nach Anspruch 5, **dadurch gekennzeichnet, dass** die genannte Kooperationslogik dazu eingesetzt werden kann, dass dem genannten anderen Relais annehmbare Übertragungseigenschaften für dieses Relais angezeigt werden.

7.  Verfahren, **dadurch gekennzeichnet, dass** es zur Weiterleitung von Daten zwischen einer Basisstation (BS) und einem Endgerät (UE) dient, wobei das genannte Verfahren aus folgenden Schritten besteht:

Bildung einer anstehenden Datenwarteschleife am Relais ($RS_1$; $RS_2$), die zu dem Endgerät gehört, wobei die genannte Datenwarteschleife empfangene Daten speichert, die für das Endgerät bestimmt sind und die noch über einen Kommunikationskanal auf dies Endgerät übertagen werden müssen, und

Planung (S90) der Übertragungen anstehender Daten vom genannten Relais an jedes Endgerät, basierend auf wenigstens einer Größe der genannten, anstehenden Datenschleife, die jedem Endgerät zugeordnet ist, und der Priorität der anstehenden Daten und Kanalzustandsmeldungen des genannten Kommunikationskanals.

8. Relais-Basisstation-Kombination ($RS_1$, BS; $RS_2$, BS), **dadurch gekennzeichnet, dass**, sie aus Folgendem besteht: Basisstation (BS), bestehend aus:

Warteschleifen-Logik (70) der Basisstation, die für jedes von der genannten Basisstation unterstützte Endgerät dazu eingesetzt werden kann, eine anstehende Datenwarteschleife zu bilden, die zu diesem Endgerät gehört, wobei die genannte, anstehende Datenwarteschleife die für dieses Endgerät bestimmten, empfangenen Daten speichert und die von der genannten Basisstation über einen Kommunikationskanal zwischen diesem Endgerät und der genannten Basisstation noch übertragen werden müssen, und

Basisstation-Planungslogik (80), die zur Planung der Übertragungen der anstehenden Daten an jedes Endgerät basierend auf einer Größe der genannten, anstehenden Datenwarteschleife, die jedem Endgerät zugeordnet ist, der Priorität der anstehenden Daten und den Kanalzustandsmeldungen des genannten Kommunikationskanals zwischen jedem Endgerät und dem genannten Relais eingesetzt werden kann, und

genanntes Relais nach einem der Ansprüche 1 bis 6.

9. Relais-Basisstation-Kombination nach Anspruch 8, **dadurch gekennzeichnet, dass** die genannte Basisstation-Planungslogik zur Planung von Übertragungen anstehender Daten eingesetzt werden kann, basierend auf wenigstens einer Größe der genannten, anstehenden Datenschleife, die jedem Endgerät zugeordnet ist, der Priorität der anstehenden Daten und den Kanalzustandsmeldungen des genannten Kommunikationskanals, der direkt zwischen jedem Endgerät und der genannten Basisstation sowie zwischen der genannten Basisstation und jedem vom Relais unterstützten Endgerät besteht.

10. Relais-Basisstation-Kombination nach Anspruch 8 oder 9, **dadurch gekennzeichnet, dass** die Planungslogik der Basisstation dazu eingesetzt werden kann, die anstehenden Daten zu identifizieren, die beim nächsten Mal übertragen werden, indem Übertragungen anstehender Daten mit höherer Priorität vor denen der anstehenden Daten mit niedrigerer Priorität eingeplant werden.

11. Relais-Basisstation-Kombination nach Anspruch 8 bis 10, **dadurch gekennzeichnet, dass** die Planungslogik der Basisstation eingesetzt werden kann, um zu entscheiden, welche anstehenden Daten aufgrund der unterschiedlichen Größe der dazugehörigen, anstehenden Datenwarteschleife am genannten Relais und der genannten Basisstation übertragen werden sollen, wenn die nächsten genannten, anstehenden Daten mittels des Kommunikationskanals zwischen der genannten Basisstation und dem Relais übertragen werden sollen.

12. Relais-Basisstation-Kombination nach irgendeinem der Ansprüche von 8 bis 11, **dadurch gekennzeichnet, dass** die Planungslogik der Basisstation die anstehenden Daten identifizieren kann, die beim nächsten Mal gemäß den folgenden Algorithmen zu übertragen sind:

$$D_l(t) = \begin{cases} R_l(t) Q_{BS}^j(t), & \text{wenn } j = dest(l) \in M \\ R_l(t) \max_{j \in M} \left\{ \max \left\{ Q_{BS}^j(t) - Q_{rs,i}^j(t), 0 \right\} \right\} & \text{wenn } dest(l) = RS_i \end{cases}$$

wobei $Q_{BS}^j(t)$ die Größe der Warteschleife an der Basisstation für das Endgeräte *j* zum Zeitpunkt t darstellt.

13. Relais-Basisstation-Kombination nach Anspruch 8 bis 12, **dadurch gekennzeichnet, dass** das genannte Relais dazu eingesetzt werden kann, eine Aussage zur genannten Größe jeder anstehenden Datenwarteschleife an der genannten Basisstation zu machen.

14. Relais-Basisstation-Kombination nach Anspruch 8 bis 12, **dadurch gekennzeichnet, dass** das genannte Relais dazu eingesetzt werden kann, eine Aussage zur veränderten Größe jeder anstehenden Datenwarteschlange zur genannten Basisstation zu machen.

**15.** Verfahren zur Weiterleitung von Daten zwischen der Relais-Basisstation-Kombination (RS$_1$, BS; RS$_2$, BS) und dem Endgerät (UE) eines drahtlosen Kommunikationssystems, **dadurch gekennzeichnet, dass** das Verfahren aus folgenden Schritten besteht:

Bildung (S10) einer anstehenden Warteschleife mit dem dazugehörigen Endgerät an einer Basisstation(BS) für jedes von der genannten Basisstation unterstützte Endgerät, wobei die anstehende Warteschleife Daten speichert, die für das Endgerät bestimmt sind und die von der genannten Basisstation über einen Kommunikationskanal zwischen diesem Endgerät und der genannten Basisstation noch übertragen werden müssen; Planung (S30) der Übertragung anstehender Daten an jedes Endgerät, basierend auf zumindest einer Größe der genannten, anstehenden Datenwarteschleife, die jedem Endgerät zugeordnet ist, der Priorität der anstehenden Daten und den Kanalzustandsmeldungen des genannten Kommunikationskanals zwischen jedem Endgerät und der genannten Basisstation sowie den genannten Verfahrensschritten nach Anspruch 7.

**Revendications**

**1.** Relais (RS$_1$ ; RS$_2$) exploitable pour relayer des données entre une station de base (BS) et un équipement d'utilisateur (UE) d'un système de communications sans fil, ledit relais comprenant :

une logique de mise en file d'attente (30) exploitable, pour chaque équipement d'utilisateur supporté par ledit relais, pour former une file d'attente de données en instance associée à cet équipement d'utilisateur, ladite file d'attente de données en instance stockant des données reçues destinées à cet équipement d'utilisateur qui doivent encore être transmises par ledit relais sur un canal de communications (L) entre cet équipement d'utilisateur et ledit relais ; et
une logique d'ordonnancement (40) exploitable pour ordonnancer des transmissions de données en instance à chaque équipement d'utilisateur sur la base d'au moins une d'une taille de ladite file d'attente de données en instance associée à chaque équipement d'utilisateur, de la priorité de données en instance et d'informations d'état de canal dudit canal de communications entre chaque équipement d'utilisateur et ledit relais.

**2.** Relais selon la revendication 1, dans lequel ladite logique d'ordonnancement est exploitable pour identifier ces données en instance devant être transmises ensuite en ordonnançant des transmissions de données en instance de priorité supérieure sur des données en instance de priorité inférieure.

**3.** Relais selon la revendication 1 ou 2, dans lequel ladite logique d'ordonnancement est exploitable pour identifier ces données en instance devant être transmises ensuite à partir de ladite taille de ladite file d'attente de données en instance associée à chaque équipement d'utilisateur et d'informations d'état de canal dudit canal de communications entre chaque équipement d'utilisateur et ledit relais.

**4.** Relais selon l'une quelconque des revendications précédentes, dans lequel ladite logique d'ordonnancement est exploitable pour identifier ces données en instance devant être transmises ensuite conformément à l'algorithme suivant :

$$D_{l_i}(t) = R_{l_i}(t) Q^j_{rs,i}(t), dest(l_i) \in M$$

où $R_{l_i}(t)$ est une estimation du taux pour le canal de communications $l_i$, l'ensemble de tous les équipements d'utilisateurs est désigné comme M = {1, K, $K$}, et $Q^j_{rs,i}(t), \forall i, j \in M$ désigne la taille des files d'attente pour un équipement d'utilisateur j dans la station de base et au niveau de l'i$^{\text{ième}}$ relais au début de la trame de temps t, et la liaison active optimale pour la trame de temps suivante est sélectionnée comme :

$$l_i^{\bullet}(t) = \arg\max_{dest(l_i)\in M} D_{l_i}(t).$$

**5.** Relais selon l'une quelconque des revendications précédentes, comprenant :

une logique de mesure (10) exploitable pour recevoir des informations identifiant des transmissions à partir d'autres relais ; et
une logique de coopération (50) exploitable, en réponse à une indication en provenance de ladite logique de mesure selon laquelle un autre relais provoque des interférences, pour provoquer des transmissions coopératives entre relais.

**6.** Relais selon la revendication 5, dans lequel ladite logique de coopération est exploitable pour indiquer audit un autre relais des caractéristiques de transmission acceptables pour ce relais.

**7.** Procédé permettant de relayer des données entre une station de base (BS) et un équipement d'utilisateur (UE) d'un système de communications sans fil, ledit procédé comprenant les étapes suivantes :

former, au niveau d'un relais (RS$_1$ ; RS$_2$), une file d'attente de données en instance associée à chaque équipement d'utilisateur, ladite file d'attente de données en instance stockant des données reçues destinées à cet équipement d'utilisateur qui doivent encore être transmises sur un canal de communications à cet équipement d'utilisateur ; et
ordonnancer (S90) des transmissions de données en instance dudit relais à chaque équipement d'utilisateur sur la base d'au moins une d'une taille de ladite file d'attente de données en instance associée à chaque équipement d'utilisateur, de la priorité de données en instance et d'informations d'état de canal dudit canal de communications.

**8.** Paire relais-station de base (RS$_1$, BS ; RS$_2$, BS), comprenant :

une station de base (BS) comprenant :

une logique de mise en file d'attente de station de base (70) exploitable, pour chaque équipement d'utilisateur supporté par ladite station de base, pour former une file d'attente de données en instance associée à cet équipement d'utilisateur, ladite file d'attente de données en instance stockant des données reçues destinées à cet équipement d'utilisateur qui doivent encore être transmises par ladite station de base sur un canal de communications entre cet équipement d'utilisateur et ladite station de base ; et
une logique d'ordonnancement de station de base (80) exploitable pour ordonnancer des transmissions de données en instance à chaque équipement d'utilisateur sur la base d'au moins une d'une taille de ladite file d'attente de données en instance associée à chaque équipement d'utilisateur, de la priorité de données en instance et d'informations d'état de canal dudit canal de communications entre chaque équipement d'utilisateur et ladite station de base ; et
ledit relais selon l'une quelconque des revendications 1 à 6.

**9.** Paire relais-station de base selon la revendication 8, dans laquelle ladite logique d'ordonnancement de station de base est exploitable pour ordonnancer des transmissions de données en instance sur la base d'au moins une de ladite taille de ladite file d'attente de données en instance associée à chaque équipement d'utilisateur, de la priorité de données en instance et d'informations d'état de canal dudit canal de communications directement entre chaque équipement d'utilisateur et ladite station de base et entre ladite station de base et tout relais supportant chaque équipement d'utilisateur.

**10.** Paire relais-station de base selon la revendication 8 ou 9, dans laquelle ladite logique d'ordonnancement de station de base est exploitable pour identifier ces données en instance devant être transmises ensuite en ordonnançant des transmissions de données en instance de priorité supérieure sur des données en instance de priorité inférieure.

**11.** Paire relais-station de base selon l'une quelconque des revendications 8 à 10, dans laquelle ladite logique d'ordonnancement de station de base est exploitable, lorsque lesdites données en instance devant être transmises ensuite doivent être transmises en utilisant ledit canal de communications entre ladite station de base et un relais, pour décider quelles données en instance transmettre sur la base d'une différence de tailles de files d'attente de données en instance associées au niveau dudit relais et de ladite station de base.

12. Paire relais-station de base selon l'une quelconque des revendications 8 à 11, dans laquelle ladite logique d'ordonnancement de station de base est exploitable pour identifier ces données en instance devant être transmises ensuite conformément à l'algorithme suivant :

$$D_l(t) = \begin{cases} R_l(t) Q_{BS}^j(t), \text{si } j = dest(l) \in M \\ R_l(t) \max_{j \in M} \left\{ \max \left\{ Q_{BS}^j(t) - Q_{rs,i}^j(t), 0 \right\} \right\}, \text{si } dest(l) = RS_i \end{cases}$$

où $Q_{BS}^j(t)$ désigne la taille de la file d'attente au niveau de la station de base pour le j$^{ième}$ équipement d'utilisateur au temps t.

13. Paire relais-station de base selon l'une quelconque des revendications 8 à 12, dans laquelle ledit relais est exploitable pour fournir une indication de ladite taille de chaque file d'attente de données en instance à ladite station de base.

14. Paire relais-station de base selon l'une quelconque des revendications 8 à 12, dans laquelle ledit relais est exploitable pour fournir une indication d'un changement de taille de chaque file d'attente de données en instance à ladite station de base.

15. Procédé permettant de relayer des données entre une paire relais-station de base (RS$_1$, BS ; RS$_2$, BS) et un équipement d'utilisateur (UE) d'un système de communications sans fil, ledit procédé comprenant les étapes suivantes :

former (S10) au niveau d'une station de base (BS), pour chaque équipement d'utilisateur supporté par ladite station de base, une file d'attente de données en instance associée à cet équipement d'utilisateur, ladite file d'attente de données en instance stockant des données reçues destinées à cet équipement d'utilisateur qui doivent encore être transmises par ladite station de base sur un canal de communications entre cet équipement d'utilisateur et ladite station de base ;
ordonnancer (S30) des transmissions de données en instance à chaque équipement d'utilisateur sur la base d'au moins une d'une taille de ladite file d'attente de données en instance associée à chaque équipement d'utilisateur, de la priorité de données en instance et d'informations d'état de canal dudit canal de communications entre chaque équipement d'utilisateur et ladite station de base ; et
lesdites étapes du procédé selon la revendication 7.

FIG. 1

FIG. 2

FIG. 3

BS

RELAY

UPDATE
QUEUES — S10

SELECT WHICH
RELAY TO UE LINK
TO TRANSMIT NEXT
DATA PACKET — S90

S30 — TRANSMIT NEXT
DIRECT TO A UE?   N

Y

IDENTIFY
TRANSMISSION
INTERFERENCE — S120

S40 — TRANSMIT NEXT
DATA PACKET
TO THAT UE

TAKE ANY
AUTHORATIVE
ACTION — S130

S50 — SELECT WHICH UE
DATA PACKET TO
TRANSMIT TO
SELECTED RELAY

TRANSMIT NEXT
DATA PACKET TO
THAT UE OVER
THAT LINK — S100

S60 — TRANSMIT NEXT
DATA PACKET FOR
SELECTED UE
TO THAT RELAY

TRANSMIT CHANGE
IN QUEUE SIZE
TO BASE STATION — S110

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080165719 A
- US 20090003267 A